# EUROPÄISCHE PATENTSCHRIFT

(11) **EP 3 251 498 B1**
(45) Veröffentlichungstag und Bekanntmachung des Hinweises auf die Patenterteilung: **03.01.2024**
(21) Anmeldenummer: 17173596.2
(22) Anmeldetag: 31.05.2017
(51) Int. Cl.: A01G 23/00

(54) **HOLZRÜCKEVORRICHTUNG**
LOGGING DEVICE
DISPOSITIF DE DÉBARDAGE

(30) Priorität: 31.05.2016 DE 102016110074
(43) Veröffentlichungstag der Anmeldung: 06.12.2017
(73) Patentinhaber: Kerscher, Peter, 93426 Roding (DE)
(72) Erfinder: Kerscher, Peter, 93426 Roding (DE)
(74) Vertreter: Lang, Christian

(56) Entgegenhaltungen:
- CA-A1- 2 411 393
- DE-A1-102014 113 586
- US-A- 4 354 539

## Beschreibung

### TECHNISCHES GEBIET

Die vorliegende Erfindung betrifft eine Holzrückevorrichtung, die eine bodenschonende Bergung von Langhölzern in schwer zugänglichem Terrain ermöglicht.

### STAND DER TECHNIK

Die Druckschrift CA 2 411 393 A1 beschreibt für die Bergung von Holzbestandteilen, wie Ästen, ein Holzsammel- und Kompaktierfahrzeug, das aus einer Zugmaschineneinheit und einer Anhängereinheit zusammengesetzt ist, wobei an der Zugmaschineneinheit eine bewegliche Greifvorrichtung angebracht ist, die zur Aufnahme von losen Holzbestandteilen und deren Transport zu einer Einlassöffnung an der Anhängereinheit dient, durch welche die Holzbestandteile in eine Verdichterinnenkammer fallen können, wobei ferner ein Verdichterelement vorgesehen ist, das in regelmäßigen Abständen die Holzbestandteile aus der Verdichterinnenkammer in eine sich anschließende innere Aufnahmekammer eines Lagerungsbehälters drückt, sodass diese darin dicht gestapelt werden. Ein voller Lagerungsbehälter kann zu einer geeigneten Einrichtung transportiert werden, wo die aufgenommenen Baumbestandteile durch Öffnen einer Klappe an dem Lagerungsbehälter entladen werden.

Für die Bergung von zu transportierenden Langhölzern, wie beispielsweise Baumstämmen von gefällten oder abgestorbenen Bäumen, sind im Stand der Technik zwei unterschiedliche Techniken bekannt.

Die eine Technik sieht für die Holzbringung, sprich für die Bergung von zu transportierenden Baumstämmen oder anderen in Wald- und Forstwirtschaft anfallenden Holzladungen, den Einsatz von schweren Bergungs- und Transportmaschinen wie Rückezügen, Baggern oder Kranfahrzeugen vor. Die zu transportierenden Langhölzer werden hierbei mittels Hebekränen mit speziellen Greifvorrichtungen direkt in dafür vorgesehen Rückewägen verladen und mittels Zugmaschinen abtransportiert. Der Vorteil dieser Methode ist, dass durch den Einsatz von Hebekränen mit entsprechenden Greifvorrichtungen, die in der Lage sind, mehrere Langhölzer auf einmal zu greifen und zu verladen, in kurzer Zeit eine große Anzahl von Ladungseinheiten verladen und abtransportiert werden können. Nachteilig an dieser Methode ist jedoch, dass zum Einen aufgrund des hohen Platzbedarfs der benötigten Gerätschaften, wie Kränen, Rückewägen und Zugmaschinen, der Einsatz auf frei zugängliche Gebiete begrenzt ist. Schwerer zugängliche Langhölzer können auf diese Weise nicht erreicht werden. Ein weiterer Nachteil dieser Methode ist der hohe Grad an Bodenschädigung in Form von Bodenverdichtung, die aufgrund des Einsatzes der schweren Geräte auftritt und ein großes Problem dieser Methode darstellt. Daher sind außer in unzugänglichen Gebieten schwere Rückefahrzeuge zur Holzbringung auch in Gebieten mir sehr empfindlichen Böden nicht einsetzbar.

Die Druckschrift DE 10 2014 113586 A1 beschreibt ein konventionelles Verfahren sowie eine Fahrzeuggruppe und Fahrzeuge für den Holztransport im Wald. Eine entsprechende Fahrzeuggruppe eignet sich zum Transport von Hölzern aus einer Rückegasse zu einer Polterstelle und umfasst ein Masterfahrzeug und mindestens einen Ladewagen, wobei das Masterfahrzeug zur Aufnahme der Hölzer und zur Übergabe der Hölzer an einen Ladewagen konfiguriert ist, wobei der Ladewagen zum Transport der Hölzer vom Aufnahmeort zu einer Ablagestelle und Abladen der Hölzer dient, wobei der leere Ladewagen anschließend zum Masterfahrzeug zurückkehrt. Das Masterfahrzeug ist konfiguriert, um zu transportierende Hölzer mittels eines Hebekrans auf eine fahrzeugeigene Ladefläche zwischenzuverladen, wobei die zu transportierende Hölzer von dort für den Transport zu einem Ablageort mittels eines Förderbands oder einer Rollenbahn an ein separates Transportfahrzeug übergeben werden.

Die zweite Methode, die speziell in Gebieten zum Einsatz kommt, die mit großen Maschinen nicht erreichbar sind, sieht zum Abtransport der Langhölzer die Verwendung von Zugvorrichtungen und das Schleppen der Langhölzer über den Waldboden vor. Hierzu sind die Zugvorrichtungen mit entsprechenden Klammer- und Greifvorrichtungen, mittels derer die Zugvorrichtungen an den zu transportierenden Langhölzern befestigt werden können, und Zugseilen versehen, über die die an der Zugvorrichtung befestigten Langhölzer mittels Einsatz von Seilwinden oder Zugmaschinen beziehungsweise bei sehr schwer zugänglichen Lagen mittels Einsatz von Pferden über den Boden gezogen werden können. Der Vorteil dieser Methode ist, dass auch Langhölzer erreicht werden können, die für großes Gerät unerreichbar sind. Ferner kann die Schädigung des Waldbodens in Form der Bodenverdichtung, die durch den Einsatz schwerer Maschinen entsteht, weitestgehend vermieden werden. Nachteilig ist jedoch, dass auch durch das Schleppen der Baumstämme über den zum Teil empfindlichen Waldboden eine starke Schädigung des Bodens entsteht. Neben der Bodenverdichtung ist das Erzeugen tiefer Bodenfurchen durch das Schleppen der Baumstämme der zweite große Faktor an Bodenschädigung, der durch das Holzrücken beziehungsweise durch die Holzbringung entsteht.

### OFFENBARUNG DER ERFINDUNG

### AUFGABE DER ERFINDUNG

Ein Ziel der vorliegenden Erfindung ist es daher, die im Stand der Technik auftretenden Probleme zu beheben und eine Holzrückevorrichtung bereitzustellen, die zum Einen die Bergung schwer zugänglicher Langhölzer ermöglicht und zum Anderen eine Schädigung des Waldbodens vermeiden kann.

### TECHNISCHE LÖSUNG

Das genannte technische Problem wird durch die erfindungsgemäße Holzrückevorrichtung mit den Merkmalen des unabhängigen Anspruchs 1 gelöst. Vorteilhafte Ausgestaltungen sind Gegenstand der abhängigen Ansprüche.

Die vorliegende Erfindung schlägt eine Vorrichtung für das Holzrücken beziehungsweise für die Holzbringung in schwer zugänglichem Gelände vor, die einen bodenschonenden Abtransport von Baumstämmen und anderen Langhölzern ermöglicht. Hierzu stellt die erfindungsgemäße Holzrückevorrichtung eine insbesondere fernsteuerbare Transport- und Bergevorrichtung bereit, die eine Transporteinheit mit Antriebseinheit, einen verstellbaren, insbesondere verschwenkbaren Hauptrahmen und eine ebenfalls verstellbare, insbesondere verschwenkbare Lastenaufnahmevorrichtung aufweist. Die Lastenaufnahmevorrichtung ist über den Hauptrahmen mit der Transporteinheit verbunden, wobei die Transporteinheit durch eine oder mehrere Komponenten gebildet sein kann, die eine Bewegung der Holzrückevorrichtung ermöglichen. Entsprechend ist der Begriff der Transporteinheit weit auszulegen und kann einzelne Räder bis zu komplexen Fahrgestellen umfassen. Durch eine verstellbare Ausbildung des Hauptrahmens und / oder die verstellbare Anordnung der Lastenaufnahmevorrichtung an dem Hauptrahmen kann die Lastenaufnahmevorrichtung bezüglich der Transporteinheit in der Position und / oder Ausrichtung verstellt werden, also insbesondere translatorisch in Höhenrichtung und / oder um eine oder zwei quer zur Bewegungsrichtung der Holzrückevorrichtung verlaufende Drehachsen, sodass immer eine geeignete Position für das Aufnehmen von Ladungsgütern, wie Bäumen und dgl. gefunden werden kann, sodass Bäume aus unwegsamstem Gelände schonend heraus transportiert werden können.

Die Lastenaufnahmevorrichtung ist als eine sich in Längsrichtung eines Hauptrahmens erstreckende Rahmenstruktur mit mindestens einer vorzugsweise mindestens ein Förderband umfassenden Fördereinrichtung ausgebildet. Die Lastenaufnahmevorrichtung ist gegen den Hauptrahmen verschwenkbar, sodass die Fördervorrrichtung aus einer horizontalen Transportposition in eine geneigte Belade- und Entladeposition gebracht werden kann, bei der ein Ende der Fördervorrichtung bis auf Bodenniveau herabgesenkt werden kann. Langhölzer oder andere Ladungseinheiten können somit mittels der Fördervorrichtung vom Boden oder einem anderen Lagerungsort auf die Lastenaufnahmevorrichtung gezogen oder von dieser auf einem Ablageort abgelegt werden.

Der Hauptrahmen dient als Verbindungselement zwischen der Lastenaufnahmevorrichtung und der Transporteinheit sowie zur Verstellung der Lastenaufnahmevorrichtung und der Transporteinheit zueinander und kann verstellbar, insbesondere verschwenkbar mit der Lastenaufnahme und mit der Transporteinheit verbunden sein. Der Hauptrahmen kann ferner selbst als ein variables Element ausgestaltet sein und zwei derart miteinander verschwenkare Hauptrahmenteileumfassen, sodass über eine entsprechende Verschwenkung der beiden Hauptrahmenteile gegeneinander in Relation zur Transporteinheit eine Variation der Höhe der Lastenaufnahmevorrichtung und damit verbunden eine Variation der vertikalen Ausmaße und des Schwerpunkts der erfindungsgemäßen Holzrückevorrichtung erzielt werden kann. Hierzu stehen die beiden Hauptrahmenteile mit ihren jeweiligen freien Enden derart mit der Transporteinheit in Verbund, dass eine relative Verschwenkung der beiden Hauptrahmenteile in Längsrichtung des Hauptrahmens ermöglicht ist.

Die Transporteinheit dient zur Fortbewegung der erfindungsgemäßen Holzrückevorrichtung und kann zwei Transporthauptrahmen umfassen, die über ein rotierbares Kupplungselement gegeneinander um eine vertikale Drehachse rotierbar miteinander verbunden sein können. Eines der beiden Transporthauptrahmenteile kann Vortriebsmittel mit einer Antriebseinheit aufweisen, wobei das Vortriebsmittel ein Kettenlaufwerk, eine Vielzahl von Laufrädern oder ein anderes geeignetes Vortriebsmittel umfassen kann. Der andere Transporthauptrahmen ist mit dem Hauptrahmen verbunden. Dieser Transporthauptrahmen kann zur Aufnahme der Hauptrahmenteile mindestens eine Laufschiene aufweisen, welche eine gleitbare Lagerung von mindestens einem Hauptrahmenteil ermöglicht. Über das rotierbare Kupplungselement können die beiden Transporthauptrahmen beliebig gegeneinander rotiert werden und somit kann die Lastenaufnahmevorrichtung in eine beliebige Orientierung zur Fahrtrichtung der Holzrückevorrichtung gebracht werden.

Sowohl die Variabilität der vertikalen Ausmaße und des Schwerpunkts der Holzrückevorrichtung als auch die Variabilität der Orientierung der Lastenaufnahmevorrichtung relativ zur Fahrtrichtung sind vorteilhaft für den Einsatz der Holzrückevorrichtung auf unebenem Gelände und leisten einen Beitrag zu einer bodenschonenden Bergung zu transportierender Langhölzer oder andere Ladungseinheiten. Das Absenken des Schwerpunkts gewährleistet einen sicheren Transport und die Verringerung der vertikalen Ausmaße erlaubt einen Einsatz in Gelände mit geringem vertikalem Bewegungsspielraum. Ferner erlaubt die Variabilität der Höhe der Lastenaufnahmevorrichtung ein vorteilhaftes Be- und Entladen der Langhölzer von Be- und Entladeplätzen unterschiedlicher Höhe und die Variabilität der Orientierung der Lastenaufnahmevorrichtung relativ zur Fahrtrichtung erlaubt, während der Be- und Entladevorgänge die Anzahl der bodenbelastenden Wendemanöver auf ein Minimum zu reduzieren.

Darüber hinaus ist die erfindungsgemäße Holzrückevorrichtung mittels einer Steuereinheit bedienbar, die vorteilhafterweise als eine Fernsteuerung ausgebildet ist, was ermöglicht, dass die Holzrückevorrichtung durch lediglich eine Person bedienbar ist.

### KURZBESCHREIBUNG DER ZEICHNUNGEN

- Fig. 1: ist eine schematische Seitenansicht der Holzrückevorrichtung gemäß einem ersten Ausführungsbeispiel der vorliegenden Erfindung, wobei hier die Lastenaufnahmevorrichtung in Neutralstellung illustriert ist.
- Fig. 2: ist eine weitere schematische Seitenansicht der Holzrückevorrichtung gemäß einem ersten Ausführungsbeispiel der vorliegenden Erfindung, wobei hier die Verschwenkung der ersten und zweiten Hauptrahmenteile gegeneinander illustriert ist.
- Fig. 3: ist eine weitere schematische Seitenansicht der Holzrückevorrichtung gemäß einem ersten Ausführungsbeispiel der vorliegenden Erfindung, wobei hier die Lastenaufnahmevorrichtung in geneigter Be- und Entladestellung illustriert ist.
- Fig. 4: ist eine schematische Seitenansicht der Holzrückevorrichtung gemäß einem zweiten Ausführungsbeispiel der vorliegenden Erfindung.
- Fig. 5: ist eine schematische Seitenansicht der Holzrückevorrichtung gemäß einem dritten Ausführungsbeispiel der vorliegenden Erfindung.
- Fig. 6: ist eine weitere schematische Seitenansicht der Holzrückevorrichtung gemäß einem dritten Ausführungsbeispiel der vorliegenden Erfindung, wobei hier die Verschwenkung der ersten und zweiten Hauptrahmenteile gegeneinander illustriert ist.
- Fig. 7: ist eine schematische Draufsicht der Lastenaufnahmevorrichtung gemäß einem vierten Ausführungsbeispiel der vorliegenden Erfindung.

### DETAILLIERTE BESCHREIBUNG DER AUSFÜHRUNGSBEISPIELE

Weitere Kennzeichen, Merkmale und Vorteile der Erfindung werden bei der nachfolgenden detaillierten Beschreibung der Ausführungsbeispiele deutlich, wobei allerdings die Erfindung nicht auf diese Beispiele beschränkt ist.

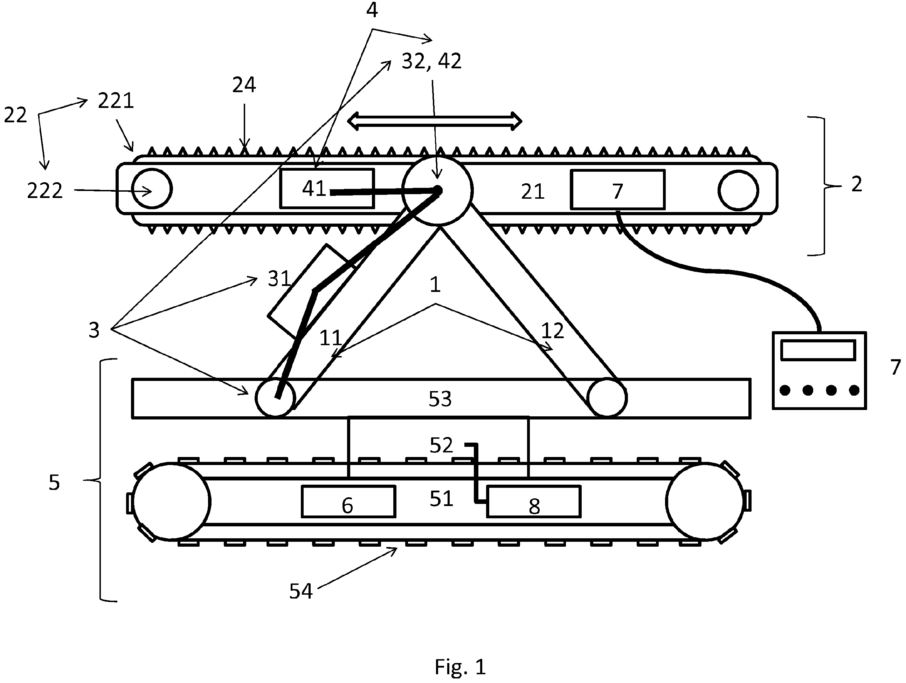

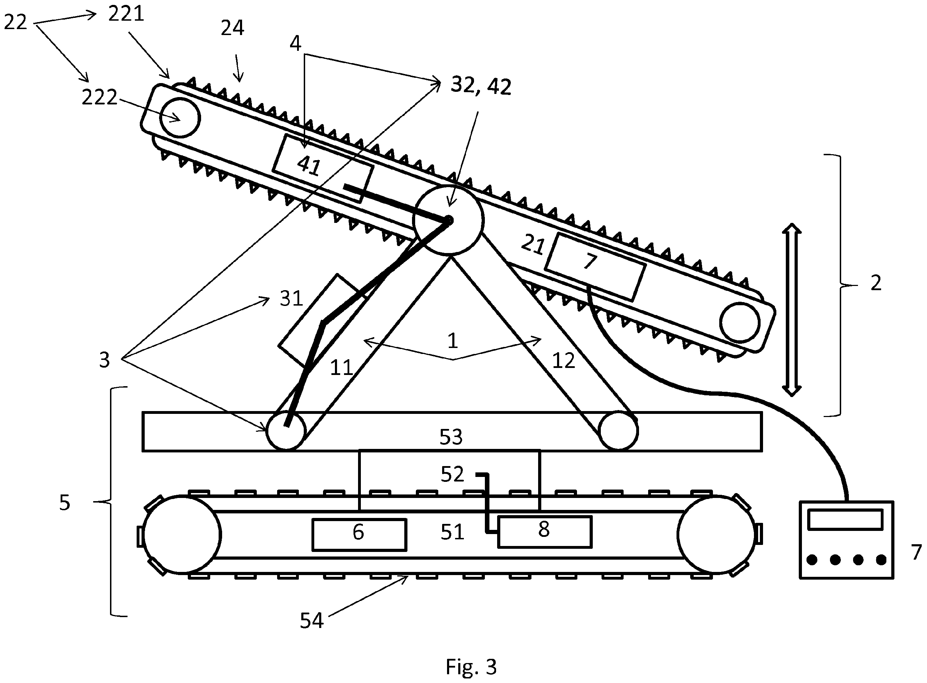

Bezugnehmend auf Fig. 1 bis Fig. 3 umfasst die erfindungsgemäße Holzrückvorrichtung gemäß einem bevorzugten ersten Ausführungsbeispiel einen Hauptrahmen 1, eine Lastenaufnahmevorrichtung 2, eine erste Schwenkvorrichtung 3, eine zweite Schwenkvorrichtung 4 und eine Transporteinheit 5.Die Transporteinheit 5 bildet das Fahrgestell der Holzrückevorrichtung und umfasst einen ersten Transporthauptrahmen 51, ein Kupplungselement 52 mit einer ersten Rotationsantriebseinheit 8, einen zweiten Transporthauptrahmen 53, der mindestens eine Laufschiene 531 aufweist, mindestens ein Vortriebsmittel 54, das in Längsrichtung des ersten Transporthauptrahmens 51 an diesem ausgebildet ist, und eine erste Antriebseinheit 6.

Der erste Transporthauptrahmen 51 ist als eine quadratische odervorzugsweise rechteckige Rahmeneinheit ausgebildet und dient als Hauptbasis des Fahrgestells der Holzrückevorrichtung. Mittig zum ersten Transporthauptrahmen 51ist das Kupplungselement 52 angeordnet, das als ein zylinderförmiges Verbindungselement ausgebildet ist und zur Kupplung der beiden ersten und zweiten Transporthauptrahmen 51, 53 miteinander dient. Über das Kupplungselement 52 wird ein gesicherter und belastbarer Verbund der beiden ersten und zweiten Transporthauptrahmen 51, 53 erzielt, der eine relative parallele Orientierung beider Transporthauptrahmen zueinander gewährleistet. Ferner ist das Kupplungselement 52 als ein rotationsfähiges Kupplungselement ausgestaltet und ermöglicht über die erste Rotationantriebseinheit 8 eine relative Rotation der beiden ersten und zweiten Transporthauptrahmen 51, 53 um eine zu den ersten und zweiten Transporthauptrahmen 51, 53 senkrechte Rotationsachse.

Der erste Transporthauptrahmen 51 weist ferner mindestens ein Vortriebsmittel 54 auf, über welches mittels der ersten Antriebseinheit 6 die Fortbewegung der erfindungsgemäßen Holzrückevorrichtung betrieben wird. In dem in den Fig. 1 bis Fig. 3 illustrierten ersten Ausführungsbeispiel ist das Vortriebsmittel 54 bevorzugt als ein Kettenlaufwerk ausgestaltet. Das Kettenlaufwerk ist als ein handelsübliches Kettenlaufwerk ausgebildet und umfasst zwei Gleisketten und eine entsprechende Anzahl von Antriebsrädern und Laufrädern, die jeweils beidseitig in Längsrichtung am ersten Transporthauptrahmen 51 ausgebildet sind. Das Vortriebsmittel 54 wird durch die erste Antriebseinheit 6 angetrieben, die als ein Verbrennungsmotor oder ein Elektromotor ausgebildet sein kann und den aktiven Antrieb des Vortriebsmittels 54 gewährleistet. Vorzugsweise ist die erste Antriebseinheit 6 hierzu derart ausgestaltet, dass ein separater direkter Antrieb der jeweils zwei Gleisketten ermöglicht ist. Wahlweise kann die erste Antriebseinheit 6 jedoch auch als eine Seilwinde ausgestaltet sein, sodass die Fortbewegung der Holzrückevorrichtung nicht über einen aktiven Antrieb durch das Vortriebsmittel 54 sondern durch eine Zugbewegung mittels der Seilwinde bewerkstelligt wird. Vorzugsweise ist die erste Antriebseinheit 6 jedoch als mindestens ein Elektromotor derart ausgestaltet, dass ein separater Betrieb der zwei Gleisketten des Kettenlaufwerks ermöglicht wird. Wahlweise kann die Antriebseinheit auch als eine Kombination aus Elektromotor und Seilwinde ausgebildet sein, sodass die Seilwinde in Abhängigkeit der Anforderungen als Unterstützung zum Antrieb durch den Elektromotor beziehungsweise als Alternative zu diesem betrieben werden kann.

Der zweite Transporthauptrahmen 53, der rotierbar über das Kupplungselement 52 mit dem ersten Transporthauptrahmen 51 verbunden ist, umfasst mindestens eine Laufschiene 531, die zur Verbindung des Hauptrahmens 1 mit der Transporteinheit 5 dient und in Längsrichtung des zweiten Transporthauptrahmens 53 an diesem ausgebildet ist.

Der Hauptrahmen 1 umfasst ein erstes Hauptrahmenteil 11 und ein zweites Hauptrahmenteil 12, die über die erste Schwenkvorrichtung 3 relativ zueinander verschwenkbar verbunden sind und die jeweils ein freies Rahmenende aufweisen. Über die freien Rahmenende sind die ersten und zweiten Hauptrahmenteile 11, 12 jeweils mit dem zweiten Transporthauptrahmen 53 verbunden, indem wenigsten ein freies Rahmenenden der beiden ersten und zweiten Hauptrahmenteile 11, 12 gleitbar beziehungsweise abrollbar in der mindestens einen Laufschiene 531 des zweiten Transporthauptrahmens 53 gelagert ist, während das freie Rahmenende des anderen Hauptrahmenteils ortsfest, aber verschwenkbar angeordnet sein kann.

Mittels der ersten Schwenkvorrichtung 3 sind die beiden ersten und zweiten Hauptrahmenteile 11, 12 gegeneinander verschwenkbar. Die erste Schwenkvorrichtung 3 ist hierfür vorzugsweise in Längsrichtung des ersten Transporthauptrahmens 51 mittig zwischen den Enden des ersten Transporthauptrahmens 51 und den Enden der Laufschiene 531 des zweiten Transporthauptrahmens 53 angeordnet. Die erste Schwenkvorrichtung 3 umfasst eine erste Schwenkantriebseinheit 31 und definiert eine erste Schwenkachse 32, die sich in Querrichtung des Hauptrahmens 1 erstreckt und um die die beiden ersten und zweiten Hauptrahmenteile 11, 12 gegeneinander verschwenkbar sind.

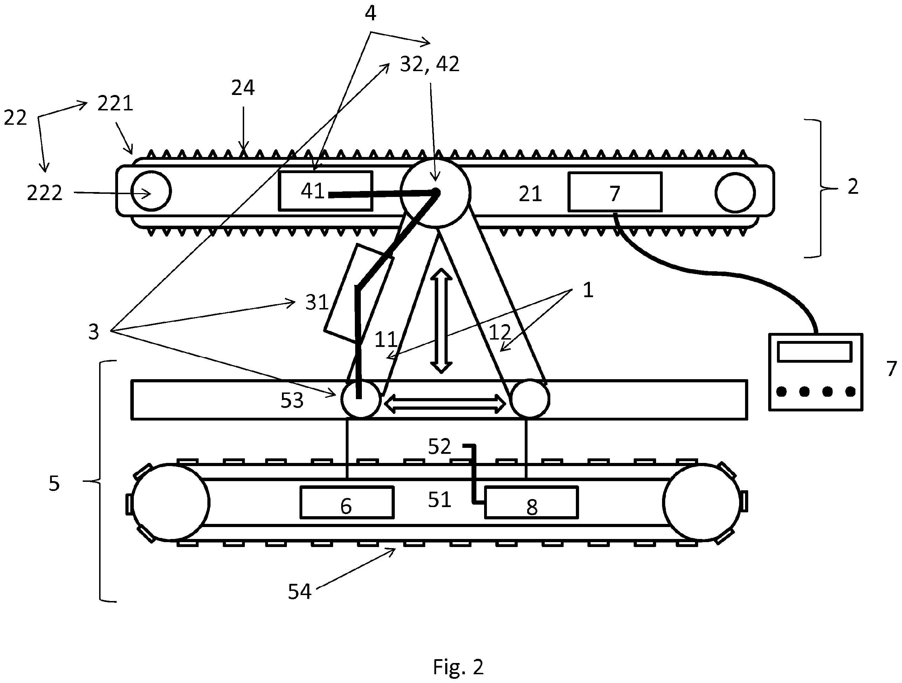

Mittels der relativen Verschwenkung der beiden ersten und zweiten Hauptrahmenteile 11, 12 gegeneinander kann das freie Ende von zumindest einem der ersten und zweiten Hauptrahmenteile 11, 12 in der Laufschiene 531 in Längsrichtung gleiten beziehungsweise abrollen , wodurch der relative Abstand der beiden freien Enden der ersten und zweiten Hauptrahmenteile 11, 12 in Längsrichtung der Laufschiene 531 zueinander variiert werden kann. Dies hat zur Folge, dass durch eine derartige Verschwenkung der beiden ersten und zweiten Hauptrahmenteile 11, 12 gegeneinander der vertikalen Abstand der Lastenaufnahmevorrichtung 2 der Holzrückevorrichtung zur Transporteinjheit 5 erhöht beziehungsweise verringert und der Schwerpunkt der erfindungsgemäßen Holzrückevorrichtung angehoben oder abgesenkt werden können, wie dies in den Fig. 1 und Fig. 2 gezeigt ist. Sowohl eine Änderung der vertikalen Ausmaße als auch eine Variation des Schwerpunkts der Holzrückevorrichtung sind in gleichem Maße vorteilhaft für den Einsatz der Holzrückevorrichtung in unwegsamem Gelände, als sie sowohl einen Einsatz in Gelände mit geringem vertikalen Bewegungsspielraum erlauben als auch durch den potentiellen niedrigen Schwerpunkt einen sicheren Transport der geladenen Langhölzer gewährleisten können.

Die Lastenaufnahmevorrichtung 2 umfasst einen Längsrahmen 21, dessen Längsrichtung parallel zur Längsrichtung des Hauptrahmens 1 verläuft, eine Fördervorrichtung 22 und die zweite Schwenkvorrichtung 4. Die Lastenaufnahmevorrichtung 2 ist über die zweite Schwenkvorrichtung 4 mit dem Hauptrahmen 1 schwenkbar verbunden. Die zweite Schwenkvorrichtung 4 umfasst hierzu eine zweite Schwenkantriebseinheit 41 und definiert eine zweite Schwenkachse 42, die sich in Querrichtung zum Längsrahmen 21 und zum Hauptrahmen 1 erstreckt und um die die Lastenaufnahmevorrichtung 2 relativ zum Hauptrahmen 1 verschwenkbar ist. Vorzugsweise sind die erste Schwenkachse 32 und die zweite Schwenkachse 42 identisch, sodass durch die erste Schwenkvorrichtung 3 und die zweite Schwenkvorrichtung 4 insgesamt nur eine Schwenkachse definiert wird und die Verschwenkung der ersten und zweiten Hauptrahmenteile 11, 12 gegeneinander und die Verschwenkung der Lastenaufnahmevorrichtung 2 gegen den Hauptrahmen 1 um die gleiche Schwenkachse geschieht. Denkbar ist jedoch auch, dass die erste Schwenkvorrichtung 3 und die zweite Schwenkvorrichtung 4 zwei unterschiedliche Schwenkachsen definieren, sodass die Verschwenkung der Hauptrahmenteile gegeneinander und die Verschwenkung der Lastenaufnahmevorrichtung gegen den Hauptrahmen um unterschiedliche Schwenkachsen durchgeführt wird.

Die Verschwenkung der Lastenaufnahmevorrichtung 2 geschieht automatisch und wird durch die zweite Schwenkantriebseinheit 41 bewerkstelligt. Die zweite Schwenkantriebseinheit 41 ist hierzu als ein Elektromotor oder eine Hydraulikantriebseinheit ausgebildet.

Die Lastenaufnahmevorrichtung 2 ist in räumlicher Ausdehnung durch den Längsrahmen 21 definiert, der sich in Längsrichtung des Hauptrahmens 1 erstreckt und eine längserstreckte Beladefläche definiert, die in Querrichtung durch den Hauptrahmen 1 begrenzt ist und sich in Längsrichtung über die Abmessungen des Hauptrahmens 1 hinaus erstreckt.

Innerhalb des Längsrahmens 21 ist eine Fördervorrichtung 22 ausgebildet, die ein Förderband 221 und eine Förderbandantriebseinheit 222 umfasst. Das Förderband 221 erstreckt sich in Längsrichtung des Längsrahmens 21 und ist mittels der Förderbandantriebseinheit 222 relativ zu einer Förderbandrichtung vorwärts und rückwärts bewegbar. Die Förderbandantriebseinheit 222 ist vorzugsweise ein Elektromotor. Das Förderband 221 der Fördervorrichtung 22 dient zur Be- und Entladung der zu transportierenden Langhölzer, indem zur Beladung die Langhölzer mittels des Förderbands 221 auf die Beladefläche gezogen werden beziehungsweise zur Entladung von dieser herunter geschoben werden. Hierzu ist das Förderband 221 aus einem in einer Kettenstruktur ausgebildeten Metallwerkstoff ausgebildet, der vorzugsweise ein rostfreier Stahlwerkstoff ist. Denkbar wäre jedoch auch eine Ausbildung aus einem widerstandsfähigen Gewebewerkstoff oder Kunststoffwerkstoff. Zur Erhöhung der Haftung der zu transportierenden Langhölzer auf dem Förderband 221 kann das Förderband 221 zusätzlich mit Hakenelementen ausgebildet sein, die aus der Förderbandfläche herausragen und ausgestaltet sind, in die Oberfläche der Langhölzer einzugreifen. Wahlweise kann das Förderband 221 auch mit Schaufelelementen oder ähnlichen Haftungselementen ausgebildet sein, die geeignet sind, die Haftung der zu transportierenden Langhölzern auf dem Förderband 221 zu erhöhen. Zur Sicherung der Langhölzer auf der Lastenaufnahmevorrichtung 2 sind an dieser ferner Halterungselemente 24 ausgebildet. Diese sind vorzugsweise seitlich am Längsrahmen 21 angeordnet und können als Gurtelemente oder Klammerelemente ausgebildet sein, die in Querrichtung des Längsrahmens 21 über die geladenen Langhölzer verspannt oder verklemmt werden, wodurch die Langhölzer auf der Lastenaufnahmevorrichtung 2 fixiert werden. Denkbar sind auch seitliche Begrenzungselemente 25 (nicht gezeigt), die entlang der Längsseiten des Längsrahmens 21 angeordnet und als Rungenelemente ausgebildet sein können, um ein seitliches Abrollen der geladen Langhölzer von der Lastenaufnahmevorrichtung 2 zu verhindern. Eine Kombination von Halterungselementen 24 und seitlichen Begrenzungselementen 25 ist ebenfalls möglich.

Zur Be- und Entladung der Langhölzer kann die Lastenaufnahmevorrichtung 2 über die zweite Schwenkvorrichtung 4 um die zweite Schwenkachse 42 gegen den Hauptrahmen 1 verschwenkt werden. Während die Neutralstellung der Lastenaufnahmevorrichtung 2 eine horizontale Ausrichtung selbiger vorsieht, durch die eine horizontal ausgerichtete Beladefläche ermöglicht wird, kann durch das Verschwenken jeweils eines der beiden Längsenden der Lastenaufnahmevorrichtung 2 bis auf Bodenniveau herabgesenkt werden. Zur Beladung der auf dem Waldboden liegenden Langhölzer ist daher ausreichend, ein Ende des zu beladenden Langholzes auf dem auf Bodenniveau abgesenkten Ende der Lastenaufnahmevorrichtung 2, spezieller auf dem jeweiligen Ende des Förderbandes 221, zu platzieren und mittels Betrieb des Förderbandes 221 das Langholz auf die Lastenaufnahmevorrichtung 2 zu ziehen. Die auf der Förderoberfläche des Förderbandes 221 ausgebildeten Haken- beziehungsweise Haftelemente verleihen dem Förderband 221 hierbei ausreichend Haftung, sodass die Langhölzer problemlos auf die Lastenaufnahmevorrichtung 2 gezogen werden können. Je nach Größe der zu transportierenden Langhölzer können auch mehrere Langhölzer nebeneinander angeordnet oder bereits zu einem Verbund miteinander fixiert gleichzeitig verladen werden. Für den Transport werden die Langhölzer bis in eine stabile Stellung auf die Lastenaufnahmevorrichtung 2 gezogen, vorzugsweise derart, dass der Schwerpunkt der beladenen Langhölzer auf der Beladefläche der Lastenaufnahmevorrichtung 2 platziert ist, und die Lastenaufnahmevorrichtung wird in die horizontale Neutralstellung verbracht. Mittels der Halterungselemente 24 und der Begrenzungselemente 25 können die beladenen Langhölzer auf der Beladefläche gesichert und fixiert werden, sodass ein Abtransport mittels der erfindungsgemäßen Holzrückevorrichtung problemlos möglich ist.

Der Transport der Langhölzer wird wenn möglich unter horizontaler Stellung der Lastenaufnahmevorrichtung 2 durchgeführt. Dies kann eine Verschwenkung der Lastenaufnahmevorrichtung 2 erfordern, bei der der Neigungswinkel zwischen Längsachse der Lastenaufnahmevorrichtung 2 und Längsachse des Hauptrahmens die Neigung des Hauptrahmens 1 ausgleicht, die speziell dann auftreten kann, wenn die erfindungsgemäße Holzrückevorrichtung auf ansteigendem oder abfallendem Grund eingesetzt wird. Durch eine entsprechende Neigung der Lastenaufnahmevorrichtung 2 kann dann trotz abschüssigen Geländes die Lastenaufnahmevorrichtung 2 weiterhin in horizontaler Ausrichtung orientiert werden. Eine horizontale Ausrichtung der Lastenaufnahmevorrichtung 2 erhöht die Transportsicherheit der geladenen Langhölzer und verhindert ein Verschieben des Schwerpunkts der Ladung und eine damit verbundene mögliche Instabilität sowohl der Ladung als auch der Holzrückevorrichtung.

Zur Entladung der geladenen Langhölzer bedarf es eines dem Beladeprozess entgegengesetzten Prozesses, bei dem das Förderband derart betrieben wird, dass die Langhölzer von der Beladefläche heruntergeschoben werden. Vorteilhafterweise kann hierzu das entsprechende Ende der Lastenaufnahmevorrichtung 2 auf die Höhe des Niveaus herabgesenkt oder angehoben werden, auf dem das Langholz abzuladen ist. Das Absenken oder Anheben des Endes der Lastenaufnahmevorrichtung 2 kann hierbei über die Verschwenkung der Lastenaufnahmevorrichtung 2 zum Hauptrahmen 1 mittels der zweiten Schwenkvorrichtung 4 erzielt werden, sodass die Lastenaufnahmevorrichtung 2 gegenüber der horizontalen Neutralstellung geneigt wird und die geladenen Langhölzer unter einem Neigungswinkel zum Entladeniveau entladen werden. Alternativ kann jedoch das Höhenniveau der Beladefläche der Lastenaufnahmevorrichtung 2 auch mittels einer Verschwenkungen der ersten und zweiten Hauptrahmenteile 11, 12 gegeneinander dem Höhenniveau des Entladeorts angeglichen werden, wobei wie oben beschrieben die Verschwenkung der ersten und zweiten Hauptrahmenteile 11, 12 gegeneinander mittels der ersten Schwenkvorrichtung 3 zu einer Erhöhung oder Absenkung der ersten Schwenkachse 32 und damit verbunden zu einer Erhöhung oder Absenkung der an dieser gelagerten Lastenaufnahmevorrichtung 2 führt. Dies hat zur Folge, dass auf diese Weise eine Neigung der Lastenaufnahmevorrichtung 2 vermieden und die geladenen Langhölzer in horizontaler Ausrichtung mittels des Förderbands 221 von der Beladefläche geschoben werden können.

Die Lastenaufnahmevorrichtung 2 kann vorzugsweise derart ausgestaltet sein, dass eine Beladung beziehungsweise Entladung über beide Enden der Lastenaufnahmevorrichtung 2 möglich ist. Hierzu ist es vorteilhaft, dass die zweite Schwenkachse 42 sowohl relativ zur Längsrichtung des Hauptrahmens 1 mittig in diesem als auch relativ zur Längsrichtung der Lastenaufnahmevorrichtung 2 mittig in dieser definiert ist, sodass beide Enden der Lastenaufnahmevorrichtung in gleicher Weise abgesenkt werden können. Die Möglichkeit den Be- oder Entladeprozess gegebenenfalls über jedes der beiden Enden der Lastenaufnahmevorrichtung 2 durchführen zu können hat den Vorteil, dass zur Be- oder Entladung der Langhölzer die Holzrückevorrichtung nicht gewendet sondern lediglich in Längsrichtung zur Lage der zu transportierenden Langhölzer oder des Entladeortes orientiert vor oder hinter diesen platziert werden muss. Dies ist speziell in schwer zugänglichem Terrain oder dicht bewachsenem Gebiet vorteilhaft, in denen ein Wenden, speziell nach Beladung der Langhölzer, unmöglich ist. Ferner trägt die Möglichkeit der beidseitigen Be- und Entladung zu einer weiteren Bodenschonung bei, da hierdurch die Anzahl bodenschädigender Wendemanöver zwecks Ausrichtung der Holzrückevorrichtung relativ zu den zu transportierenden Langhölzern beziehungsweise des Entladeortes reduziert werden kann.

In diesem Zusammenhang ist ebenfalls die Möglichkeit einer relativen Rotation der beiden ersten und zweiten Transporthauptrahmen 51, 53 zueinander mittels des rotierbaren Kupplungselements 52 vorteilhaft. Eine derartige Rotation der beiden Transporthauptrahmen gegeneinander führt neben der Rotation der beiden Transporthauptrahmen auch zu einer Rotation der Lastenaufnahmevorrichtung 2 relativ zur Fahrtrichtung der Holzrückevorrichtung. Dies wiederum ermöglicht somit, dass Langhölzer in beliebiger Orientierung relativ zur Fahrtrichtung der Holzrückevorrichtung be- und entladen werden können. Zur einer Be- oder Entladung eines Langholzes ist es demnach ausreichend, die Holzrückevorrichtung in einer beliebigen Orientierung in Längsrichtung vor oder hinter dem Langholz oder dem Entladeort zu platzieren und lediglich mittels Rotation über das rotierbare Kupplungselement 52 die Lastenaufnahmevorrichtung 2 in eine parallele Orientierung zur Längsrichtung des Langholzes beziehungsweise des Entladeorts auszurichten. Eine Ausrichtung der gesamten Holzrückevorrichtung in eine parallele Orientierung zur Längsachse des Be- oder Entladeortes ist nicht notwendig. Nach abgeschlossener Be- oder Entladung des Langholzes kann für den Transport die Lastenaufnahmevorrichtung 2 somit wieder in die Ausgangsstellung parallel zur Fahrtrichtung ausgerichtet werden, sodass für den Rückweg die Holzrückevorrichtung gegebenenfalls die Spur des Hinwegs in entgegengesetzter Fahrtrichtung befahren kann. Zeitaufwendige und bodenschädigende Wendemanöver zwecks Ausrichtung der Holzrückevorrichtung relativ zum Be- oder Entladeort entfallen somit oder können auf ein Minimum reduziert werden.

Die Steuerung der erfindungsgemäßen Holzrückevorrichtung findet über eine Steuereinheit 7 statt, die vorzugsweise als eine Fernsteuereinheit ausgebildet ist. Über die Steuereinheit 7 können sämtliche Funktionen der Holzrückevorrichtung, wie der Antrieb des Vortriebsmittels 54, die Lenkung der Holzrückevorrichtung, die Rotation der Lastenaufnahmevorrichtung 2 mittels der ersten Rotationsantriebseinheit 8, die Variation der Höhe der Lastenaufnahmevorrichtung 2 über die Verschwenkung der ersten und zweiten Hauptrahmenteile 11, 12 mittels der ersten Schwenkvorrichtung 3, das Verschwenken der Lastenaufnahmevorrichtung 2 über die zweiten Schwenkvorrichtung 4 sowie der Betrieb des Förderbandes 221 geregelt werden. Somit kann die erfindungsgemäße Holzrückevorrichtung durch lediglich einen einzelnen Nutzer betrieben werden.

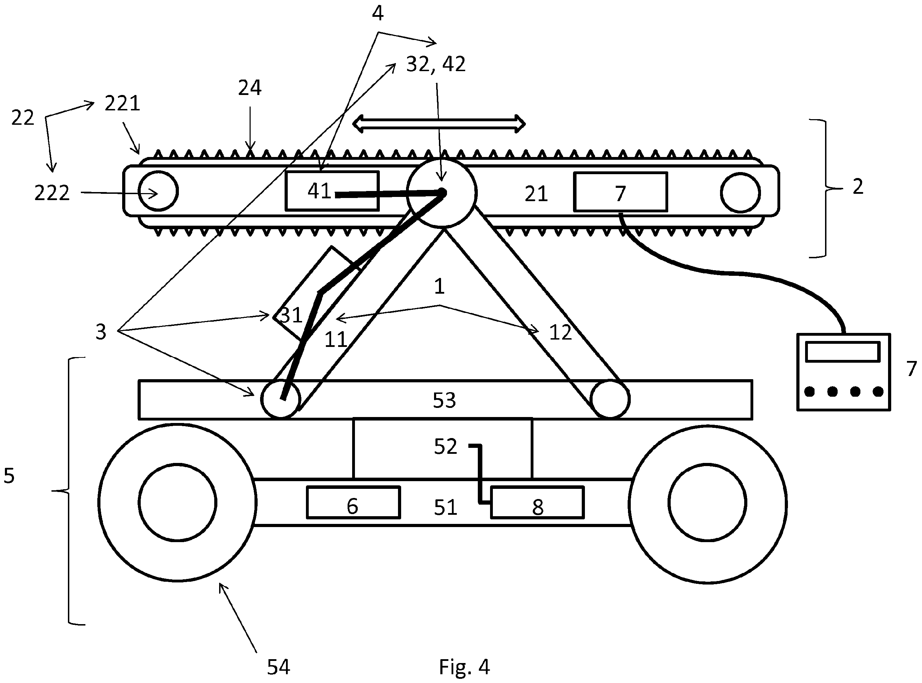

Bezugnehmend auf Fig. 4 sieht ein zweites Ausführungsbeispiel der vorliegenden Erfindung vor, dass das Vortriebsmittel 54 nicht wie im ersten Ausführungsbeispiel als Kettenlaufwerk sondern als eine Vielzahl von Laufrädern ausgebildet ist. Abgesehen von dieser Änderung entspricht das zweite Ausführungsbeispiel in allen weiteren Merkmalen ausnahmslos dem ersten Ausführungsbeispiel.

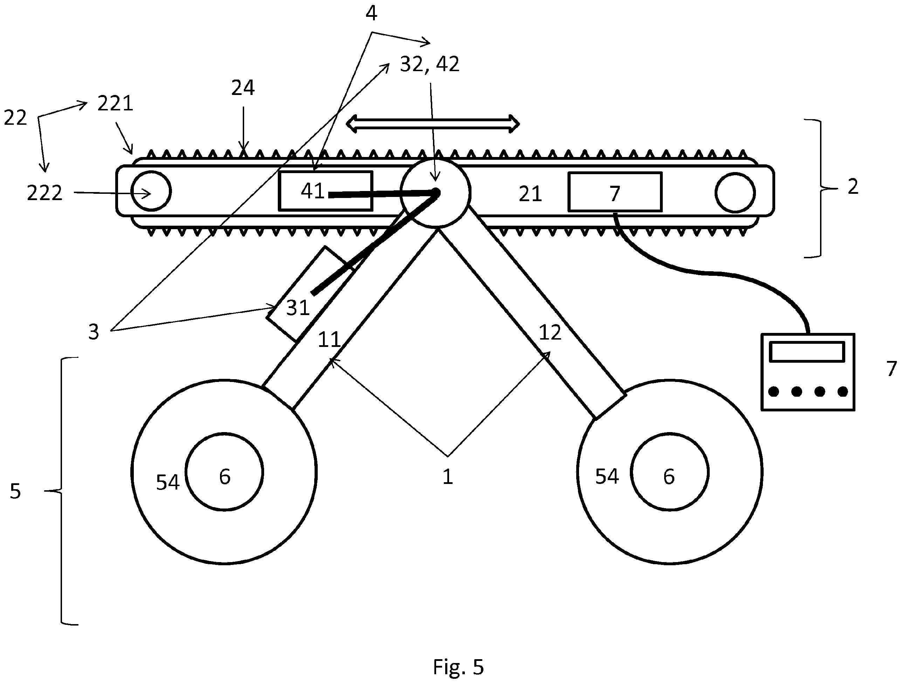

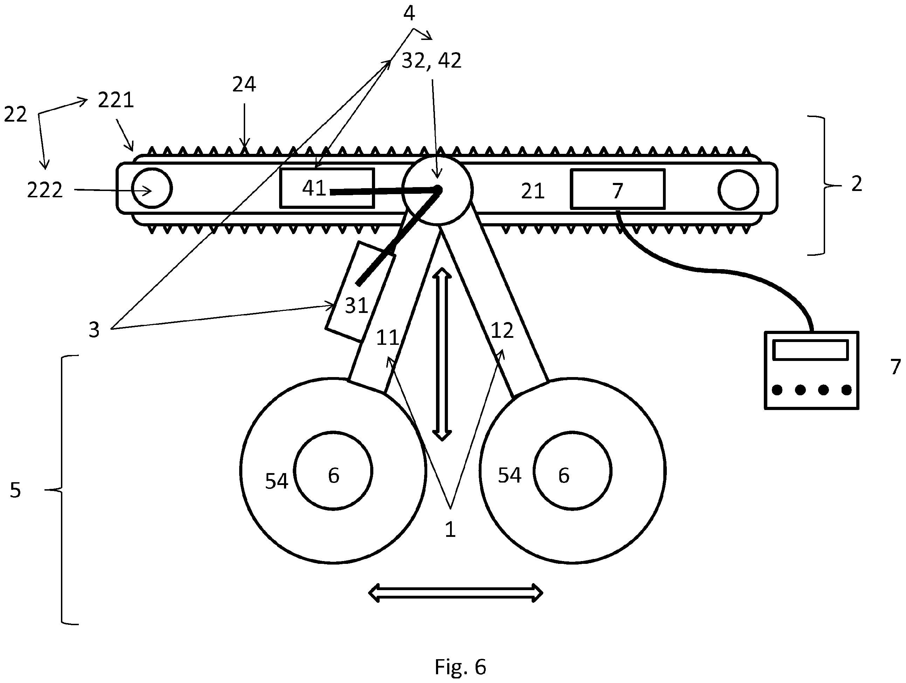

Denkbar ist jedoch, das Kupplungselement 52 als ein teilbares Kupplungselement 52 auszubilden, das gegebenenfalls eine Trennung des ersten Transporthauptrahmens 51 und des zweiten Transporthauptrahmens 53 voneinander erlaubt, und somit ein Austausch eines ersten Transporthauptrahmens 51 mit einem Vortriebsmittel 54 gemäß dem ersten Ausführungsbeispiel durch einen ersten Transporthauptrahmen 51 mit einem Vortriebsmittel 54 gemäß dem zweiten Ausführungsbeispiel oder einem anderen vorteilhaften Vortriebsmittel ermöglicht ist, sodass das Vortriebsmittel 54 den jeweiligen Anforderungen gemäß beliebig und problemlos austauschbar ist.In Fig. 5 und Fig. 6 ist ein drittes Ausführungsbeispiel der erfindungsgemäßen Holzrückevorrichtung illustriert. Im Hinblick auf die ersten beiden Ausführungsbeispiele unterscheidet sich das dritte Ausführungsbeispiel von den beiden vorherigen dahingehend, dass bei der Transporteinheit 5 auf die ersten und zweiten Transporthauptrahmen 51, 53 und das Kupplungselement 52 verzichtet wird und das Vortriebsmittel 54 in Form einer Vielzahl von Laufrädern direkt an den freien Enden der beiden ersten und zweiten Hauptrahmenteilen 11, 12 angebracht ist.

Der Antrieb der Laufräder 54 wird auch weiterhin über die erste Antriebseinheit 6 erzielt, die ebenfalls weiterhin ein Verbrennungsmotor, ein Elektromotor oder eine Seilwinde sein kann, vorzugsweise jedoch ein Elektromotor beziehungsweise eine Kombination aus Elektromotor und Seilwinde ist.

Die Laufräder 54 können an den beiden Hauptrahmenteilen 11, 12 mittels Achsaufhängungen oder aber über Einzelradaufhängungen ausgebildet sein. Ferner kann der Antrieb der Laufräder 54 mittels einer gemeinsamen ersten Antriebseinheit 6 erfolgen oder aber jedes Laufrad 54 kann mittels einer eigenen ersten Antriebseinheit 6 individuell angetrieben werden. Wahlweise können auch nur zwei der vier Laufräder 54 angetrieben werden, während die übrigen zwei Laufräder 54 ohne eigenen Antrieb verbleiben. Bevorzugt ist jedoch eine Einzelradaufhängung jedes einzelnen Laufrades 54 an einem entsprechenden freien Ende der ersten und zweiten Hauptrahmenteile 11, 12 mit einem individuellen Einzelradantrieb eines jeden einzelnen Laufrads 54, indem jedes der Laufräder 54 über einen eigenen separaten Elektromotor angetrieben wird.

Wie im Zuge der Beschreibung des ersten Ausführungsbeispiels bereits dargelegt, sind die beiden ersten und zweiten Hauptrahmenteile 11, 12 mittels der ersten Schwenkvorrichtung 3 gegeneinander verschwenkbar. Durch die Verschwenkung der beiden ersten und zweiten Hauptrahmenteile 11, 12 gegeneinander können die jeweiligen freien Enden der ersten und zweiten Hauptrahmenteile 11, 12 in Längsrichtung des Hauptrahmens 1 voneinander entfernt beziehungsweise einander angenähert werden. Aufgrund der direkten Ausbildung der Laufräder 54 an den freien Enden der beiden ersten und zweiten Hauptrahmenteile führt somit die relative Verschwenkung der beiden ersten und zweiten Hauptrahmenteile 11, 12 gegeneinander im vorliegenden Ausführungsbeispiel zu einer Änderung des Radabstandes relativ zur Längsrichtung des Hauptrahmens 1 der vorderen und hinteren Paare von Laufrädern 54.

Ähnlich den ersten beiden Ausführungsbeispielen führt die Verschwenkung auch im dritten Ausführungsbeispiel zu einem Anheben beziehungswese Absenken der Lastenaufnahmevorrichtung 2 und damit verbunden zu einem Anheben oder Absenken des Gesamtschwerpunkts der Holzrückevorrichtung. Im vorliegenden Ausführungsbeispiel führt eine derartige Verschwenkung, im Gegensatz zu den beiden vorherigen Ausführungsbeispielen, jedoch ferner zu einer Vergrößerung beziehungsweise Verringerung der Unterbodenhöhe der Holzrückevorrichtung, sprich des vertikalen Abstands zum Boden des Hauptrahmens 1 zwischen den vorderen und hinteren Laufrädern 54, derart dass ein kurzer Radstand mit einem hohen Schwerpunkt und einer vergrößerten Unterbodenhöhe und entsprechend ein langer Radstand mit einem niedrigen Schwerpunkt und einer geringen Unterbodenhöhe korrelieren. Ein derart variierbarer Radstand und eine derart variierbare Unterbodenhöhe sind vorteilhaft, da somit sowohl Radstand als auch Unterbodenhöhe den Bodengegebenheiten individuell angepasst werden können, was wiederum dazu führt, dass die erfindungsgemäße Holzrückevorrichtung einen breiten Einsatzbereich abdecken kann und speziell in ansonsten schwer zugänglichem Terrain einsetzbar ist.

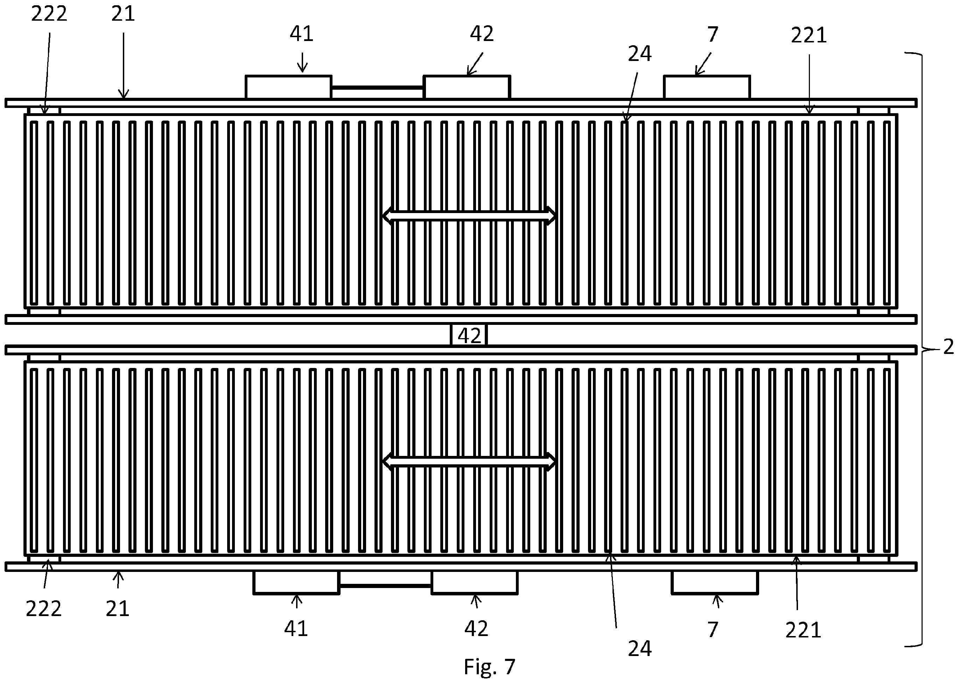

Bei dem Ausführungsbeispiel der Figuren 6 und 7 ist keine Möglichkeit einer Drehausrichtung der Lastenaufnahmevorrichtung bezüglich der Bewegungsrichtung der Holzrückevorrichtung vorgesehen, da kein Drehgelenk innerhalb der Transporteinheit vorgesehen ist. Allerdings ist es auch denkbar ein entsprechendes Drehgelenk in der Lastenaufnahmevorrichtung oder zwischen Lastenaufnahmevorrichtung und Hauptrahmen oder im Hauptrahmen vorzusehen.

Bezugnehmend auf Fig. 7 kann in einem vierten Ausführungsbeispiel die Lastenaufnahmevorrichtung 2 zwei oder mehrere individuell voneinander unabhängige Fördervorrichtungen 22 umfassen. Vorteilhafterweise sind diese mehreren Fördervorrichtung 22 relativ zur Längsrichtung der Lastenaufnahmevorrichtung 2 nebeneinander angeordnet, wobei jede Fördervorrichtung 22 in einem separaten Längsrahmen 21 angeordnet ist, die wiederum separat mit einer zweiten Schwenkvorrichtung 4 ausgebildet sind und entweder um jeweils separate oder die gleiche zweite Schwenkachse 42 mit dem Hauptrahmen 1 schwenkbar verbunden sind. Vorzugsweise sind die mehreren Fördervorrichtungen 4 mit individuellen Förderbändern 221 und individuellen Förderbandantriebseinheiten 222 ausgebildet. Die einzelnen Fördervorrichtungen 22 sind ferner derart ausgebildet, dass jede einzeln unabhängig von den jeweils anderen betrieben werden kann, sodass mehrere Fördervorrichtungen 22 gleichzeitig und gleichgerichtet oder gleichzeitig und entgegengesetzt gerichtet oder beliebig nacheinander betrieben werden können, wobei der Betrieb das Verschwenken um die zweite Schwenkachse 42 wie auch den Betrieb der Förderbänder 221 umfasst.

Eine derartige Ausbildung mit mehreren voneinander unabhängig betreibbaren Fördervorrichtungen ist dahingehend vorteilhaft, dass auf diese Weise durch die erfindungsgemäße Holzrückevorrichtung die Be- und Entladung mehrerer voneinander getrennter Ladungseinheiten in einem Arbeitsschritt durchgeführt werden können. Somit ist es beispielsweise möglich, dass mehrere örtlich getrennt voneinander gelagerte Langhölzer beziehungsweise Ladungseinheiten in einer Fahrtstrecke der Holzrückevorrichtung aufgeladen und abtransportiert werden und zeitaufwändiges und bodenbelastendes Hin- und Herverfahren zur Aufnahme der einzelnen Langholzladungseinheiten, bei dem pro Fahrt jeweils nur eine Ladungseinheit abtransportiert werden kann, vermieden werden können.

Die erfindungsgemäße Holzrückevorrichtung weist gegenüber dem Stand der Technik die folgenden Vorteile auf.

Die erfindungsgemäße Holzrückevorrichtung ist ideal ausgestaltet für die Holzbringung von schwer zugänglich gelagerten Langhölzern und den Einsatz in unwegsamem Gelände.

Mit dem erfindungsgemäß variierbaren Hauptrahmen und den damit verbundenen variierbaren vertikalen Ausmaße und den vergleichsweise geringen horizontalen Ausmaßen ist die erfindungsgemäße Holzrückevorrichtung ideal für den Einsatz in schwer befahrbarem Gelände ausgerüstet, in dem ein Einsatz größerer Holzbringungsmaschinen wie Rückefahrzeugen mit Ladekran nicht in Frage kommt.

Durch die spezifische Ausgestaltung der erfindungsgemäßen Lastenaufnahmevorrichtung kann auf den Einsatz eines Ladekrans verzichtet werden, wodurch die erfindungsgemäße Holzrückevorrichtung mit einem vergleichsweise sehr geringen Gewicht gefertigt werden kann. Dies hat den Vorteil, dass Bodenschädigungen in Form von Bodenverdichtung hervorgerufen durch das hohe Gewicht von Großmaschinen wie Rückefahrzeugen vermieden werden können.

Ferner kann durch die erfindungsgemäße Lastenaufnahmevorrichtung, über die die Langhölzer mittels des Förderbandes auf die Holzrückevorrichtung aufgeladen und auf dieser während des Transports fixiert gelagert werden, ein Schleppen der Langhölzer über den Waldboden vermieden werden, wie dies bei Holzrückevorrichtungen für die Bergung in unwegsamen Gelände im Stand der Technik vorgesehen ist. Somit kann neben der Bodenverdichtung auch die Bodenschädigung durch das Schleppen der Langhölzer vermieden werden.

Darüber hinaus können durch die erfindungsgemäße Ausgestaltung der Lastenaufnahmevorrichtung, die eine Verschwenkung um eine horizontale Achse, eine Rotation um eine vertikale Achse und eine beidseitige und separate Aufnahme und Abgabe einzelner Ladungseinheiten erlaubt, die Anzahl der Bergungsfahrten auf ein Minimum reduziert und unnötige Wendemanöver vermieden werden. Beides verringert die Bodenbelastung während des Bergungseinsatzes und beschleunigt insgesamt die Bergung.

Zusätzlich ist die erfindungsgemäße Holzrückevorrichtung mittels der Fernsteuereinheit einfach bedienbar und kann einschließlich der Be- und Entladung der Langhölzer durch lediglich eine einzelne Bedienperson betrieben werden.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist.

## Patentansprüche

1. Holzrückevorrichtung zur Bergung von Langhölzern, umfassend:
eine Transporteinheit (5);
mindestens eine Lastenaufnahmevorrichtung (2) zur Aufnahme von Ladungseinheiten, einen Hauptrahmen (1), der mit der Transporteinheit (5) und der Lastenaufnahmevorrichtung (2) verbunden ist,
und
eine Steuereinheit (7) zur Steuerung der Holzrückevorrichtung und ihrer Komponenten,
wobei der Hauptrahmen (1) so ausgebildet ist, dass die Lastenaufnahmevorrichtung (2) in Position und /oder Ausrichtung relativ zur Transporteinheit (5) verstellbar ist, und wobei die Lastenaufnahmevorrichtung (2) mindestens einen Längsrahmen und mindestens eine Fördervorrichtung (22) aufweist, wobei die Längsachse des Längsrahmens sich parallel zu einer Förderrichtung der Fördervorrichtung (22) erstreckt, **dadurch gekennzeichnet, dass**
die Lastenaufnahmevorrichtung (2) gegen den Hauptrahmen (1) verschwenkbar ist, sodass die Fördervorrichtung (22) aus einer horizontalen Transportposition in eine geneigte Belade- und Entladeposition gebracht werden kann, bei der ein Ende der Fördervorrichtung (22) bis auf Bodenniveau herabgesenkt werden kann, wobei Langhölzer somit mittels der Fördervorrichtung (22) vom Boden auf die Lastenaufnahmevorrichtung (2) gezogen oder von dieser auf einem Ablageort heruntergeschoben werden.

2. Holzrückevorrichtung nach Anspruch 1,
**dadurch gekennzeichnet, dass**
der Hauptrahmen (1) ein erstes Hauptrahmenteil (11) und ein zweites Hauptrahmenteil (12) umfasst, die mittels einer ersten Schwenkvorrichtung (3) um eine erste Schwenkachse (32) schwenkbar miteinander verbunden sind, sodass der Abstand zwischen Lastenaufnahmevorrichtung und Transporteinheit verstellbar ist, wobei die Lastenaufnahmevorrichtung außerdem über eine zweite Schwenkvorrichtung (4) um eine zweite Schwenkachse (42) schwenkbar mit dem Hauptrahmen verbunden ist, sodass die Neigung einer Förderebene der Fördervorrichtung (22) zum Hauptrahmen und zur Transporteinheit verstellbar ist.

3. Holzrückevorrichtung nach Anspruch 1 oder 2,
**dadurch gekennzeichnet, dass**
die mindestens eine Fördervorrichtung (22) ein in Längsrichtung des Längsrahmens verlaufendes, insbesondere umlaufendes Förderband, insbesondere Gitterband, oder eine entsprechende Förderkette aufweist.

4. Holzrückevorrichtung nach Anspruch 2,
**dadurch gekennzeichnet, dass**
die zweite Schwenkachse (42) quer zur Förderrichtung der Fördervorrichtung (22), insbesondere parallel zur ersten Schwenkachse (32) und vorzugsweise koaxial oder identisch zur ersten Schwenkachse (32) ausgebildet ist, sodass die Enden des Längsrahmens in Längsrichtung abgesenkt und angehoben werden können.

5. Holzrückevorrichtung nach einem der vorhergehenden Ansprüche,
**dadurch gekennzeichnet, dass**
die Transporteinheit einen ersten Transporthauptrahmen (51) und einen zweiten Transporthauptrahmen (53) aufweist, die über ein Kupplungselement (52) miteinander verbunden sind, wobei an dem ersten Transporthauptrahmen ein Vortriebsmittel und eine erste Antriebseinheit ausgebildet sind, und wobei der zweite Transporthauptrahmen mit dem Hauptrahmen verbunden ist und insbesondere mindestens eine Laufschiene aufweist, in der die freien Enden der ersten und zweiten Hauptrahmenteile zumindest teilweise gleitbar gelagert sind.

6. Holzrückevorrichtung nach Anspruch 5,
**dadurch gekennzeichnet, dass**
das Vortriebsmittel mit mindestens einem Kettenlaufwerk oder mit einer Vielzahl von Laufrädern ausgebildet ist.

7. Holzrückevorrichtung nach Anspruch 5 oder 6,
**dadurch gekennzeichnet, dass**
das Kupplungselement (52) ein Drehgelenk ist, und der erste Transporthauptrahmen (51) und der zweite Transporthauptrahmen (53) über das Kupplungselement um einen beliebigen Winkel zwischen 0° und 360° und um eine zur Bewegungsrichtung der Transporteinheit quer verlaufende Drehachse gegeneinander rotierbar sind.

8. Holzrückevorrichtung nach einem der Ansprüche 5 bis 7,
**dadurch gekennzeichnet, dass**
das Kupplungselement (52) zur relativen Rotation der ersten und zweiten Transporthauptrahmen eine Rotationsantriebseinheit umfasst, wobei die Rotationsantriebseinheit einen Elektromotor oder eine Hydraulikantriebseinheit umfasst.

9. Holzrückevorrichtung nach Anspruch 2 oder 4,
**dadurch gekennzeichnet, dass**
die erste Schwenkvorrichtung (3) zur relativen Verschwenkung der ersten und zweiten Hauptrahmenteile (11,12) zueinander eine erste Schwenkantriebseinheit aufweist, wobei die erste Schwenkantriebseinheit einen Elektromotor oder eine Hydraulikantriebseinheit umfasst.

10. Holzrückevorrichtung nach Anspruch 2 oder 4,
**dadurch gekennzeichnet, dass**
die zweite Schwenkvorrichtung (4) zur relativen Verschwenkung der Lastenaufnahmevorrichtung zum Hauptrahmen eine zweite Schwenkantriebseinheit aufweist, wobei die zweite Schwenkantriebseinheit ein Elektromotor oder eine Hydraulikantriebseinheit umfasst.

11. Holzrückevorrichtung nach einem der vorhergehenden Ansprüche,
**dadurch gekennzeichnet, dass**
die Lastenaufnahmevorrichtung (2) relativ zum Hauptrahmen mit einem Drehsinn in Uhrzeiger- wie auch in Gegenuhrzeigerrichtung verschwenkbar ist.

12. Holzrückevorrichtung nach einem der vorhergehenden Ansprüche,
**dadurch gekennzeichnet, dass**
mehrere Lastenaufnahmevorrichtung und/oder Fördervorrichtungen quer zur Längsrichtung des Längsrahmens nebeneinander angeordnet sind, die insbesondere unabhängig voneinander einzeln betreibbar sind.

13. Holzrückevorrichtung nach einem der vorhergehenden Ansprüche,
**dadurch gekennzeichnet, dass**
die mindestens eine Lastenaufnahmevorrichtung (2) zur Fixierung der Lasten auf der Lastenaufnahmevorrichtung Halterungselemente aufweist, wobei diese Halterungselemente Klammerelemente, Gurtelemente oder seitliche Begrenzungselemente sind.

14. Holzrückevorrichtung nach Anspruch 2,
**dadurch gekennzeichnet, dass**
die Transporteinheit eine Vielzahl von Laufrädern und mindestens eine erste Antriebseinheit umfasst, wobei die Laufräder über eine Achsaufhängung oder eine Einzelradaufhängung über die freien Enden der ersten und zweiten Hauptrahmenteile direkt mit dem Hauptrahmen drehbar verbunden sind und/oder dass die Laufräder gemeinsam über eine Antriebseinheit angetrieben werden oder jedes der Laufräder jeweils einzeln von einer separaten ersten Antriebseinheit angetrieben wird.

15. Holzrückevorrichtung nach einem der vorhergehenden Ansprüche,
**dadurch gekennzeichnet, dass**
die mindestens eine erste Antriebseinheit ein Verbrennungsmotor, ein Elektromotor oder eine Seilwinde ist.

16. Holzrückevorrichtung nach Anspruch 10,
**dadurch gekennzeichnet, dass**
die Steuereinheit eine Fernsteuereinheit ist und zur Steuerung der Antriebseinheit, der ersten und zweiten Schwenkantriebseinheiten und der Förderbandantriebseinheiten dient.

## Claims

1. A logging device for recovering long logs comprising:
a transport unit (5);
at least one load pick-up device (2) for receiving load units,
a main frame (1) connected to the transport unit (5) and the load pick-up device (2); and
a control unit (7) for controlling the logging device and its components,
wherein the main frame (1) is configured such that the load pick-up device (2) is adjustable in position and/or orientation relative to the transport unit (5), and
wherein the load pick-up device (2) comprises at least one longitudinal frame and at least one conveying device (22), wherein the longitudinal axis of the longitudinal frame extends parallel to a conveying direction of the conveying device (22),
**characterised in that**
the load pick-up device (2) is pivotable against the main frame (1), so that the conveying device (22) can be brought from a horizontal transport position into an inclined loading and unloading position, in which one end of the conveying device (22) can be lowered to ground level, wherein long logs are thus pulled from the ground onto the load pick-up device (2) by means of the conveying device (22) or pushed down from it onto a storage location.

2. The logging device according to claim 1,
**characterised in that**
the main frame (1) comprises a first main frame part (11) and a second main frame part (12), which are connected to one another pivotably about a first pivot axis (32) by means of a first pivoting device (3), such that the distance between the load pick-up device and the transport unit is adjustable, wherein the load pick-up device is also connected to the main frame pivotably about a second pivot axis (42) via a second pivoting device (4), such that the inclination of a conveying plane of the conveying device (22) to the main frame and to the transport unit is adjustable.

3. The logging device according to claim 1 or 2,
**characterised in that**
the at least one conveyor device (22) has a conveyor belt, in particular a circulating conveyor belt, in particular a lattice belt, running in the longitudinal direction of the longitudinal frame, or a corresponding conveyor chain.

4. The logging device according to claim 2, **characterised in that**
the second pivot axis (42) is configured transversely to the conveying direction of the conveying device (22), in particular parallel to the first pivot axis (32) and preferably coaxial or identical to the first pivot axis (32), so that the ends of the longitudinal frame can be lowered and raised in the longitudinal direction.

5. The logging device according to any one of the preceding claims,
**characterised in that**
the transport unit comprises a first transport main frame (51) and a second transport main frame (53), which are connected to one another via a coupling element (52), wherein a propulsion means and a first drive unit are formed on the first transport main frame, and wherein the second transport main frame is connected to the main frame and in particular comprises at least one running rail, in which the free ends of the first and second main frame parts are at least partially slidably mounted.

6. The logging device according to claim 5,
**characterised in that**
the propulsion means is formed with at least one tracked running gear or with a plurality of running wheels.

7. The logging device according to claim 5 or 6,
**characterised in that**
the coupling element (52) is a rotary joint, and the first transport main frame (51) and the second transport main frame (53) can be rotated relative to one another via the coupling element through any angle between 0° and 360° and about an axis of rotation running transversely to the direction of movement of the transport unit.

8. The logging device according to any one of claims 5 to 7,
**characterised in that**
the coupling element (52) comprises a rotary drive unit for the relative rotation of the first and second transport main frames, wherein the rotary drive unit comprises an electric motor or a hydraulic drive unit.

9. The logging device according to claim 2 or 4,
**characterised in that**
the first pivot device (3) has a first pivot drive unit for pivoting the first and second main frame parts (11, 12) relative to one another, wherein the first pivot drive unit comprises an electric motor or a hydraulic drive unit.

10. The logging device according to claim 2 or 4, **characterised in that**
the second pivot device (4) has a second pivot drive unit for pivoting the load pick-up device relative to the main frame, wherein the second pivot drive unit comprises an electric motor or a hydraulic drive unit.

11. The logging device according to any one of the preceding claims, **characterised in that**
the load pick-up device (2) is pivotable relative to the main frame in both a clockwise and a counterclockwise direction.

12. The logging device according to any one of the preceding claims,
**characterised in that**
a plurality of load pick-up devices and/or conveying devices are arranged next to one another transversely to the longitudinal direction of the longitudinal frame, which can be operated individually, in particular independently of one another.

13. The logging device according to any one of the preceding claims,
**characterised in that**
the at least one load pick-up device (2) comprises retaining elements for securing the loads on the load pick-up device, wherein these retaining elements are clip elements, belt elements or lateral delimiting elements.

14. The logging device according to claim 2,
**characterised in that**
the transport unit comprises a plurality of running wheels and at least one first drive unit, wherein the running wheels are rotatably connected directly to the main frame via an axle suspension or an independent wheel suspension via the free ends of the first and second main frame parts and/or **in that** the running wheels are jointly driven via a drive unit or each of the running wheels is individually driven by a separate first drive unit.

15. The logging device according to any one of the preceding claims,
**characterised in that**
the at least one first drive unit is an internal combustion engine, an electric motor, or a winch.

16. The logging device according to claim 10,
**characterised in that**
the control unit is a remote-control unit and is used to control the drive unit, the first and second pivot drive units, and the conveyor belt drive units.

## Revendications

1. Dispositif de débardage pour la récupération de bois longs, comprenant :
une unité de transport (5) ;
au moins un dispositif de réception de charge (2) pour recevoir des unités de chargement, un cadre principal (1) qui est relié à l'unité de transport (5) et au dispositif de réception de charge (2) ;
et
un dispositif de commande (7) pour commander le dispositif de débardage et ses composants,
dans lequel le cadre principal (1) est conçu de sorte que le dispositif de réception de charge (2) soit réglable en position et/ou en orientation par rapport à l'unité de transport (5), et dans lequel le dispositif de réception de charge (2) présente au moins un cadre longitudinal et au moins un dispositif de transport (22), dans lequel l'axe longitudinal du cadre longitudinal s'étend parallèlement à une direction de transport du dispositif de transport (22),
**caractérisé en ce que**
le dispositif de réception de charge (2) peut pivoter contre le cadre principal (1), de sorte que le dispositif de transport (22) puisse être amené d'une position de transport horizontale dans une position de chargement et de déchargement inclinée, dans laquelle une extrémité du dispositif de transport (22) peut être abaissée jusqu'au niveau du sol, dans lequel des bois longs sont ainsi tirés depuis le sol sur le dispositif de réception de charge (2) au moyen du dispositif de transport (22) ou sont glissées par celui-ci sur un emplacement de dépôt.

2. Dispositif de débardage selon la revendication 1,
**caractérisé en ce que**
le cadre principal (1) comprend une première partie de cadre principal (11) et une seconde partie de cadre principal (12) qui sont reliées l'une à l'autre de manière pivotante autour d'un premier axe de pivotement (32) au moyen d'un premier dispositif de pivotement (3), de sorte que la distance entre le dispositif de réception de charge et l'unité de transport soit réglable, dans lequel le dispositif de réception de charge est en outre relié au cadre principal de manière pivotante autour d'un second axe de pivotement (42) au moyen d'un second dispositif de pivotement (4), de sorte que l'inclinaison d'un plan de transport du dispositif de transport (22) soit réglable par rapport au cadre principal et à l'unité de transport.

3. Dispositif de débardage selon la revendication 1 ou 2,
**caractérisé en ce que**
l'au moins un dispositif de transport (22) présente une bande de transport, en particulier une bande grillagée, s'étendant dans la direction longitudinale du cadre longitudinal, en particulier rotative, ou une chaîne de transport correspondante.

4. Dispositif de débardage selon la revendication 2,
**caractérisé en ce que**
le second axe de pivotement (42) est réalisé transversalement à la direction de transport du dispositif de transport (22), en particulier parallèlement au premier axe de pivotement (32) et de préférence coaxialement ou identiquement au premier axe de pivotement (32), de sorte que les extrémités du cadre longitudinal puissent être abaissées et relevées dans la direction longitudinale.

5. Dispositif de débardage selon l'une quelconque des revendications précédentes, **caractérisé en ce que**
l'unité de transport présente un premier cadre principal de transport (51) et un second cadre principal de transport (53) qui sont reliés l'un à l'autre via un élément de couplage (52), dans lequel un moyen de propulsion et une première unité d'entraînement sont réalisés sur le premier cadre principal de transport, et dans lequel le second cadre principal de transport est relié au cadre principal et présente en particulier au moins un rail dans lequel les extrémités libres des première et seconde parties de cadre principal sont logées au moins partiellement de manière coulissante.

6. Dispositif de débardage selon la revendication 5,
**caractérisé en ce que**
le moyen de propulsion est réalisé avec au moins un train de roulement à chaîne ou avec une pluralité de roues.

7. Dispositif de débardage selon la revendication 5 ou 6,
**caractérisé en ce que**
l'élément de couplage (52) est une articulation rotative, et le premier cadre principal de transport (51) et le second cadre principal de transport (53) peuvent tourner l'un par rapport à l'autre par l'intermédiaire de l'élément de couplage selon un angle quelconque compris entre 0° et 360° et autour d'un axe de rotation s'étendant transversalement à la direction de déplacement de l'unité de transport.

8. Dispositif de débardage selon l'une quelconque des revendications 5 à 7, **caractérisé en ce que**
l'élément de couplage (52) comprend une unité d'entraînement en rotation pour la rotation relative des premier et second cadres principaux de transport, dans lequel l'unité d'entraînement en rotation comprend un moteur électrique ou une unité d'entraînement hydraulique.

9. Dispositif de débardage selon la revendication 2 ou 4,
**caractérisé en ce que**
le premier dispositif de pivotement (3) présente une première unité d'entraînement de pivotement pour le pivotement relatif des première et seconde parties de cadre principal (11, 12) l'une par rapport à l'autre, dans lequel la première unité d'entraînement de pivotement comprend un moteur électrique ou une unité d'entraînement hydraulique.

10. Dispositif de débardage selon la revendication 2 ou 4,
**caractérisé en ce que**
le second dispositif de pivotement (4) présente une seconde unité d'entraînement de pivotement pour le pivotement relatif du dispositif de réception de charge par rapport au cadre principal, dans lequel la seconde unité d'entraînement de pivotement comprend un moteur électrique ou une unité d'entraînement hydraulique.

11. Dispositif de débardage selon l'une quelconque des revendications précédentes, **caractérisé en ce que**
le dispositif de réception de charge (2) peut pivoter par rapport au cadre principal avec un sens de rotation dans le sens des aiguilles d'une montre ainsi que dans le sens inverse des aiguilles d'une montre.

12. Dispositif de débardage selon l'une quelconque des revendications précédentes, **caractérisé en ce que**
plusieurs dispositifs de réception de charge et/ou dispositifs de transport sont agencés les uns à côté des autres transversalement à la direction longitudinale du cadre longitudinal, lesquels peuvent en particulier être actionnés individuellement indépendamment les uns des autres.

13. Dispositif de débardage selon l'une quelconque des revendications précédentes, **caractérisé en ce que**
l'au moins un dispositif de réception de charge (2) présente des éléments de maintien pour fixer les charges sur le dispositif de réception de charge, dans lequel lesdits éléments de maintien sont des éléments de pince, des éléments de sangle ou des éléments de limitation latérale.

14. Dispositif de débardage selon la revendication 2,
**caractérisé en ce que**
l'unité de transport comprend une pluralité de roues et au moins une première unité d'entraînement, dans lequel les roues sont reliées de manière rotative directement au cadre principal par l'intermédiaire d'une suspension d'essieu ou d'une suspension de roue individuelle via les extrémités libres des première et seconde parties de cadre principal et/ou **en ce que** les roues sont entraînées ensemble par l'intermédiaire d'une unité d'entraînement ou chacune des roues est entraînée individuellement respectivement par une première unité d'entraînement séparée.

15. Dispositif de débardage selon l'une quelconque des revendications précédentes, **caractérisé en ce que**
ladite au moins une première unité d'entraînement est un moteur à combustion interne, un moteur électrique ou un treuil à câble.

16. Dispositif de débardage selon la revendication 10,
**caractérisé en ce que**
le dispositif de commande est une unité de commande à distance et sert à commander l'unité d'entraînement, les première et seconde unités d'entraînement pivotantes et les unités d'entraînement de bande de transport.
